# EUROPÄISCHE PATENTSCHRIFT

(11) **EP 3 567 708 B1**
(45) Veröffentlichungstag und Bekanntmachung des Hinweises auf die Patenterteilung: **09.03.2022**
(21) Anmeldenummer: 18171383.5
(22) Anmeldetag: 09.05.2018
(51) Int. Cl.: H02K 15/03, H02K 41/03, F16B 5/02, F16B 37/12, H02K 1/17, H02K 1/34

(54) **SEKUNDÄRTEIL FÜR EINEN EISENLOSEN LINEARMOTOR**
SECONDARY PART FOR AN IRONLESS LINEAR MOTOR
PARTIE SECONDAIRE POUR UN MOTEUR LINÉAIRE SANS FER

(43) Veröffentlichungstag der Anmeldung: 13.11.2019
(73) Patentinhaber: ETEL S.A., 2112 Môtiers (CH)
(72) Erfinder: GARCIA HERREROS, Ivan, 2123 St. Sulpice (CH); MOREL, Jean-Pierre, 25300 Les Fourgs (FR)
(74) Vertreter: Pleyer, Hans Anno

(56) Entgegenhaltungen:
- WO-A1-2017/163978
- JP-A- 2005 237 087
- JP-A- 2006 304 438
- AMPG Catalogue: "Sex bolts & Mating Fasteners", , 1. Januar 2014 (2014-01-01), Seiten 1-6, XP055514993, Gefunden im Internet: URL:https://ampg.com/wp-content/uploads/20 14/11/2014-AMPG-SexBolt-CatPgs.pdf [gefunden am 2018-10-12]

## Beschreibung

### GEBIET DER TECHNIK

Diese Schrift betrifft Ausführungsformen eines Sekundärteils für einen Linearmotor, insbesondere Ausführungsformen eines Sekundärteils für einen eisenlosen Linearmotor, sowie Ausführungsformen eines eisenlosen Linearmotors.

### STAND DER TECHNIK

Beispiele für eisenlose Linearmotoren sind aus der WO 2017/163978 A1, der US 2006/0175907 A1, der JP 2005237087 A und der JP 2006304438 A bekannt. Außerdem beschreibt die europäische Patentanmeldung mit der Anmeldenummer EP17196215.2 Aspekte eines eisenlosen Linearmotors, insbesondere eines Sekundärteils für einen eisenlosen Linearmotor.

Linearmotoren werden oft eingesetzt, wenn es um eine hochgenaue und gegebenenfalls auch schnelle Positionierung von Objekten geht, wie zum Beispiel bei einer Linearachse einer Werkzeugmaschine. Dabei kann das Primärteil des Linearmotors über eine geeignete Schnittstelle unmittelbar mit dem zu bewegenden Maschinenteil oder einem sonstigen Objekt verbunden sein. Das heißt, im Gegensatz zu einem konventionellen Rotationsmotor entfällt hier die Notwendigkeit eines zwischen den Linearmotor und das anzutreibende Objekt geschalteten Getriebes.

Für Anwendungen, die eine besonders präzise Positionierung erfordern, eignen sich vor allem so genannte eisenlose Linearmotoren, bei denen den Spulen des Primärteils kein Eisenkern zugeordnet ist. Hierdurch lassen sich störende Rastkräfte vermeiden.

Der oben erwähnten europäischen Patentanmeldung mit der Anmeldenummer EP17196215.2 ist zu entnehmen, dass zur Montage eines Sekundärteils zwei sich gegenüberliegende, Permanentmagnete abwechselnder Polarität tragende Jochplatten mit einem Abstandshalter verbunden werden. Hierzu weist der Abstandshalter durchgehende Bohrungen mit einem Innengewinde auf, so dass die Jochplatten von beiden Seiten her mittels Schrauben mit dem Abstandshalter verbunden werden können. Außerdem sind durchgehende Bohrungen im Abstandshalter und entsprechende Ausnehmungen in den Jochplatten vorhanden, durch die das Sekundärteil an einem Maschinenteil befestigt werden kann. Hierfür muss das Maschinenteil entsprechende Gewindebohrungen aufweisen. Die Herstellung und Montage der Bestandteile des Sekundärteils, bzw. dessen Montage an einem Maschinenteil, sind also mit einem gewissen Aufwand verbunden.

### ZUSAMMENFASSUNG DER ERFINDUNG

Es ist daher Aufgabe der Erfindung, ein Sekundärteil eines eisenlosen Linearmotors anzugeben, bei dem dieser Aufwand reduziert ist.

Diese Aufgabe wird gelöst durch eine Anordnung mit einem Maschinenteil und einem am Maschinenteil montierten Sekundärteil gemäß Anspruch 1.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: ein Sekundärteil gemäß dem Stand der Technik,
- Figur 2: ein weiteres Sekundärteil,
- Figur 3: ein erfindungsgemäßes

Ausführungsbeispiel eines an einem Maschinenteil montierten Sekundärteils.

### BESCHREIBUNG DER AUSFÜHRUNGSFORMEN

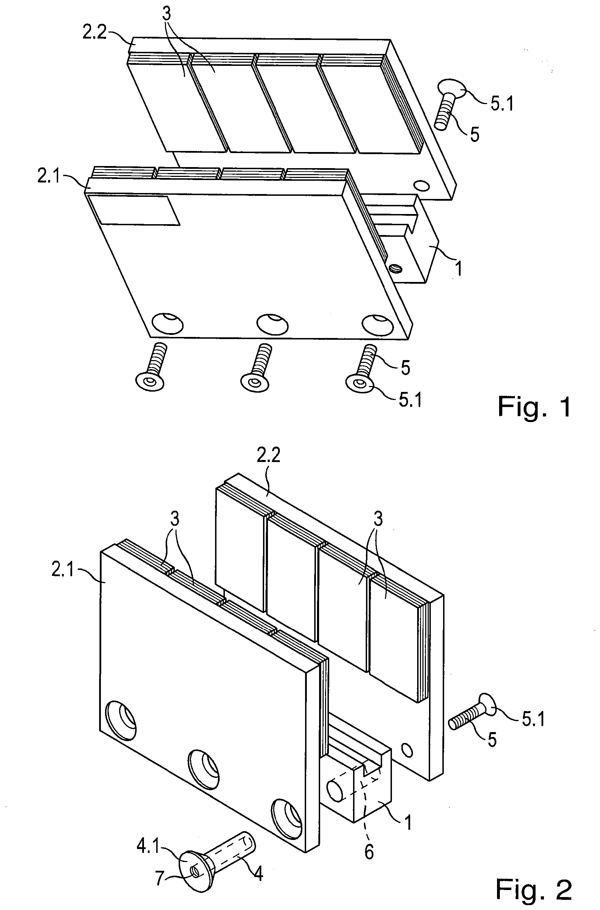

Die Figur 1 zeigt ein Sekundärteil gemäß dem Stand der Technik. Eine erste Jochplatte 2.1 und eine zweite Jochplatte 2.2 sind so mit einem Abstandshalter 1 verbunden, dass die beiden Jochplatten 2.1, 2.2 parallel zueinander und sich gegenüberliegend angeordnet sind. Die Jochplatten 2.1, 2.2 tragen Magnete 3 abwechselnder Polarität, wobei sich die Polarität nebeneinander liegender Magnete 3 ebenso unterscheidet wie die Polarität der sich jeweils gegenüberliegenden, einander zugewandten Pole der Magnete 3. Die Richtung der Magnetisierung der sich gegenüberliegenden Magnete 3 ist dabei jeweils gleich, die Richtung der Magnetisierung der nebeneinanderliegenden Magnete 3 ist um 180 Grad gedreht.

Die Jochplatten 2.1, 2.2 bilden zusammen mit dem Abstandshalter 1 ein im Querschnitt U-förmiges Profil, in dem sich das hier nicht dargestellte Primärteil des eisenlosen Linearmotors zwischen den Magneten 3 bewegen kann. Primärteil und Sekundärteil werden jeweils an unterschiedlichen Elementen einer Maschine befestigt, die sich zueinander bewegen sollen. Zwischen diesen Elementen wirkt eine Linearführung, die somit auch das Primärteil relativ zum Sekundärteil führt.

Die Jochplatten 2.1, 2.2 sind mittels Schrauben 5 am Abstandshalter 1 befestigt. Hierzu werden diese Schrauben 5 durch die Jochplatten 2.1, 2.2 gesteckt und in den Abstandshalter 1 geschraubt, der hierfür geeignete Bohrungen mit Innengewinde aufweist. Die Schraubenköpfe 5.1 der Schrauben 5 legen dann die Jochplatten 2.1, 2.2 am Abstandshalter 1 fest. Im Beispiel der Figur 1 müssen also im Abstandshalter 1 passende Bohrungen und Innengewinde eingebracht werden, und zur Montage insgesamt sechs Schrauben 5 in das Sekundärteil eingeschraubt werden.

Die Figur 2 zeigt ein Sekundärteil, das mittels spezieller Schrauben hergestellt wurde. Der Abstandshalter 1 weist wenigstens zwei Durchgangsbohrungen 6 auf, die nun kein Gewinde mehr benötigen, und die damit erheblich einfacher zu fertigen sind. Zur Montage werden nun sogenannte Buchschrauben (auch als Chicago-Schraube oder englisch screw post bezeichnet) verwendet, die üblicherweise zum Binden von Büchern oder im Möbelbau eingesetzt werden. Solche Buchschrauben bestehen aus zwei Teilen: Eine Hülse 4 mit Innengewinde und einem ersten Schraubenkopf 4.1, in die eine herkömmliche Schraube 5 mit zweitem Schraubenkopf 5.1 eingeschraubt wird.

Wie in der Figur 2 gezeigt, werden durch die Durchgangsbohrungen 6 die Hülsen 4 gesteckt, so dass die ersten Schraubenköpfe 4.1 die erste Jochplatte 2.1 am Abstandshalter 1 festlegen. Die herkömmlichen Schrauben 5 werden durch die zweite Jochplatte 2.2 in die Hülsen 4 eingeschraubt so dass die zweiten Schraubenköpfe 5.1 die zweite Jochplatte 2.2 am Abstandshalter 1 festlegen. Um beim Einschrauben der Schraube 5 ein Mitdrehen der Hülse 4 zu vermeiden, kann im ersten Schraubenkopf 4.1 z.B. ein Innensechskantprofil vorgesehen sein. Mit einem passenden Innensechskantschlüssel oder einer entsprechenden Vorrichtung auf einem Montagetisch können dann die Hülsen 4 gegen Mitdrehen gesichert werden. Auf einem Montagetisch mit solchen Vorrichtungen muss das Sekundärteil während der Montage nicht gewendet werden, so dass im Vergleich zum Stand der Technik ein weiterer Arbeitsschritt entfällt. Statt einem Innensechskantprofil sind natürlich auch andere Schraubenkopfantriebe möglich.

Auf diese Weise kann nicht nur auf die Herstellung eines Innengewindes in den Durchgangslöchern 6 des Abstandshalters 1 verzichtet werden, es halbiert sich außerdem die Anzahl der Schraubvorgänge bei der Montage der Jochplatten 2.1, 2.2 am Abstandshalter 1.

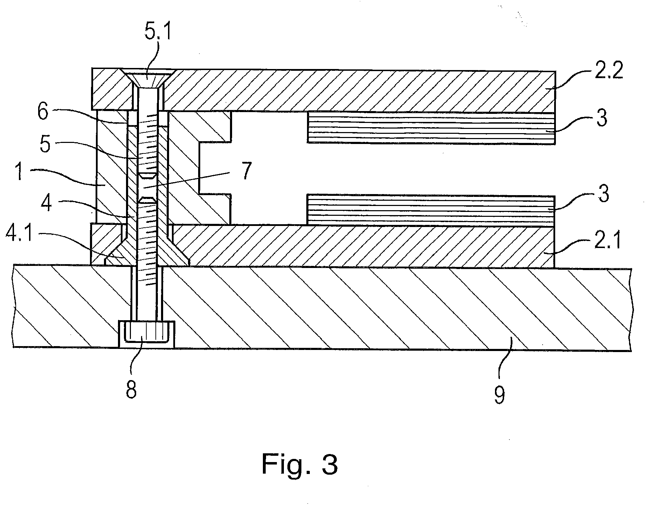

Die vorliegende Erfindung ist in der Figur 3 gezeigt. Das Sekundärteil mit seinen beiden am Abstandshalter 1 befestigten Jochplatten 2.1, 2.2 ist hier an einem Maschinenteil 9 befestigt, also in einer Applikation verbaut. Anders als in herkömmlichen Buchschrauben weisen die Hülse 4 und der erste Schraubenkopf 4.1 ein gemeinsames Durchgangsloch 7 mit Innengewinde auf. Eine Montageschraube 8 kann also durch eine einfache Bohrung ohne eigenes Gewinde im Maschinenteil 9 gesteckt und in die Hülse 4 geschraubt werden. Der zur Herstellung des Sekundärteils nötige Aufwand ist weiter reduziert, da am Sekundärteil keine separaten Bohrungen zur Befestigung am Maschinenteil 9 mehr nötig sind, und auch die Vorbereitung des Maschinenteils 9 ist gegenüber dem Stand der Technik vereinfacht.

Zwischen der Hülse 4 und den Schrauben 5 empfiehlt sich die Verwendung eines Schraubensicherungslacks, damit sich beim Lösen des Sekundärteils vom Maschinenteil 9 die Jochplatten 2.1, 2.2 nicht vom Abstandshalter 1 lösen.

Durch die Verwendung eines speziellen Befestigungsmittels kann also der Aufwand zur Herstellung solcher Sekundärteile verringert werden, und zwar indem eine spezielle Ausführungsform dieser Befestigungsmittel mit einem Durchgangsloch 7 mit Innengewinde verwendet wird.

## Patentansprüche

1. Anordnung mit einem Maschinenteil und einem am Maschinenteil montierten Sekundärteil für einen eisenlosen Linearmotor, mit einem Abstandshalter (1) und mit zwei parallel zueinander liegenden Jochplatten (2.1, 2.2), die Magnete (3) abwechselnder Polarität tragen, wobei die erste Jochplatte (2.1) und die zweite Jochplatte (2.2) vom Abstandshalter (1) in einem definierten Abstand gehalten werden und zusammen mit dem Abstandshalter (1) ein im Querschnitt U-förmiges Profil bilden, in dem sich ein Primärteil des Linearmotors bewegen kann, und wobei der Abstandshalter (1) wenigstens zwei Durchgangsbohrungen (6) aufweist, **dadurch gekennzeichnet, dass** durch die erste Jochplatte (2.1) und durch die Durchgangsbohrungen (6) jeweils eine Hülse (4) mit je einem ersten Schraubenkopf (4.1) und je einem Innengewinde gesteckt sind, wobei die ersten Schraubenköpfe (4.1) die erste Jochplatte (2.1) am Abstandshalter (1) festlegen, und dass jeweils eine Schraube (5) mit je einem zweiten Schraubenkopf (5.1) durch die zweite Jochplatte (2.2) in die jeweilige Hülse (4) eingeschraubt ist, so dass die zweiten Schraubenköpfe (5.1) die zweite Jochplatte (2.2) am Abstandshalter (1) festlegen, und dass die Hülsen (4) und ersten Schraubenköpfe (4.1) jeweils ein gemeinsames Durchgangsloch (7) mit Innengewinde aufweisen, und dass das Sekundärteil mittels einer Montageschraube (8) am Maschinenteil (9) befestigt ist, indem die Montageschraube (8) durch eine Bohrung ohne eigenes Gewinde im Maschinenteil (9) gesteckt und in das Durchgangsloch (7) der Hülse (4) eingeschraubt ist.

## Claims

1. Arrangement having a machine part and a secondary part, assembled on the machine part, for an ironless linear motor, having a spacer element (1) and two yoke plates (2.1. 2.2) which lie parallel to one another and support magnets (3) of alternating polarities, wherein the first yoke plate (2.1) and the second yoke plate (2.2) are held at a defined spacing by the spacer element (1) and conjointly with the spacer element (1) form a profile which is U-shaped in cross section and in which a primary part of the linear motor can move, and wherein the spacer element (1) has at least two through bores (6), **characterized in that** a sleeve (4) having in each case a first screw head (4.1) and in each case an internal thread is inserted in each case through the first yoke plate (2.1) and through the through bores (6), wherein the first screw heads (4.1) establish the first yoke plate (2.1) on the spacer element (1), and **in that** a screw (5) having in each case a second screw head (5.1) is screwed into the respective sleeve (4) through the second yoke plate (2.2) such that the second screw heads (5.1) establish the second yoke plate (2.2) on the spacer element (1), and **in that** the sleeves (4) and the first screw heads (4.1) have in each case one common through bore (7) with an internal thread, and **in that** the secondary part by means of an assembly screw (8) is fastened to the machine part (9) **in that** the assembly screw (8) is inserted through a bore without a dedicated thread in the machine part (9) and is screwed into the through bore (7) of the sleeve (4).

## Revendications

1. Agencement comprenant une partie de machine et une partie secondaire pour un moteur linéaire sans fer, montée sur la partie de machine, un écarteur (1) et deux plaques de culasse (2.1, 2.2) situées en parallèle l'une à l'autre et portant des aimants (3) de polarité alternée, la première plaque de culasse (2.1) et la deuxième plaque de culasse (2.2) étant maintenues à une distance définies par l'écarteur (1) et formant avec l'écarteur (1) un profil à section transversale en forme de U dans lequel une partie primaire du moteur linéaire peut se déplacer, et l'écarteur (1) présentant au moins deux alésages traversants (6),
**caractérisé en ce qu'**à travers la première plaque de culasse (2.1) et à travers les alésages traversants (6), respectivement une douille (4) dotée respectivement d'une première tête de vis (4.1) et respectivement d'un taraudage est insérée, les premières têtes de vis (4.1) immobilisant la première plaque de culasse (2.1) au niveau de l'écarteur (1), et **en ce que** respectivement une vis (5) doté respectivement d'une deuxième tête de vis (5.1) est vissée à travers la deuxième plaque de culasse (2.2) dans la douille (4) respective de sorte que les deuxièmes têtes de vis (5.1) immobilisent la deuxième plaque de culasse (2.2) au niveau de l'écarteur (1), et **en ce que** les douilles (4) et les premières têtes de vis (4.1) présentent respectivement un trou traversant commun (7) doté d'un taraudage, et **en ce que** la partie secondaire est fixée à la partie de machine (9) au moyen d'une vis de montage (8) **en ce que** la vis de montage (8) est insérée à travers un alésage sans filet propre dans la partie de machine (9) et vissée dans le trou traversant (7) de la douille (4).
